# EUROPÄISCHE PATENTANMELDUNG

(11) **EP 1 294 167 A2**
(43) Veröffentlichungstag der Anmeldung: **19.03.2003**
(21) Anmeldenummer: 02028760.3
(22) Anmeldetag: 23.12.2002
(51) Int. Cl.: H04M 11/04

(54) **Verfahren zur Alarmierung, Alarmierungssystem und Funkrufempfänger für ein solches**

(71) Anmelder: Swissphone Telecom AG, 8832 Wollerau (CH)
(72) Erfinder: Köchler, Helmut, 8832 Wollerau (CH)
(74) Vertreter: Blum, Rudolf Emil Ernst

(57) **Zusammenfassung**

Bei einem Alarmsystem (20) werden Funkrufempfänger (2, 3) mit einem Alarmsignal (4) aus einer Einsatzzentrale (1) bedient. Die Funkrufempfänger weisen ein Nahbereichskommunikationsmittel (7, 8), insbesondere eine Funkschnittstelle nach dem Bluetooth-Standard auf, durch welche der Empfang des Alarmsignals und/oder das Eintreffen des Trägers des Funkrufsignals bei einer Sammelstelle (10) über ein kompatibles Kommunikationsmittel (9) erkennbar und an die Einsatzzentrale rückmeldbar ist. Auf diese Weise ist dort der Stand der Alarmierung ersichtlich.

## Beschreibung

Die Erfindung betrifft ein Verfahren zur Alarmierung gemäss Oberbegriff des Anspruchs 1 bzw. des Anspruchs 6. Ferner betrifft die Erfindung ein Alarmierungssystem gemäss Oberbegriff des Anspruchs 8 sowie die Verwendung eines Funkrufempfängers gemäss Anspruch 12 und einen Funkrufempfänger gemäss Anspruch 14.

Im Alarmierungswesen, z.B. bei Feuerwehren, Rettungsdiensten, ist zur Kosteneinsparung eine Konzentration auf Alarmierungs- bzw. Einsatzzentralen für grosse, überregionale Einsatzgebiete zu beobachten. Solche Einsatzzentralen verfügen nur schwerlich über die Kenntnis der lokalen Gegebenheiten und den aktuellen notwendigen Zeitbedarf bis zur Einsatzbereitschaft der alarmierten Personen. Auch auf Mannschaftsseite besteht ein Bedürfnis zu Kosteneinsparungen. Es werden daher möglichst nur so viele Personen ausgebildet wie nötig und auch jeweils möglichst nur soviele Personen aufgeboten wie nötig. Die Alarmierung via Telefonalarm bedingt grosse Mannschaftsbestände, da die Effizienz der Alarmierung oft ungenügend ist. Abhilfe bietet eine Alarmierung über Funkrufempfänger (Pager), die von den gegebenenfalls zu alarmierenden Personen bei sich getragen werden. Dies erlaubt das Versenden von Alarmmeldungen über das Funkrufnetz, was bekannt ist und sich bewährt hat.

Der Erfindung liegt die Aufgabe zugrunde, die Einsatzmöglichkeiten bei der Alarmierung mittels Funkrufnetz und Pagern zu verbessern.

Diese Aufgabe wird zunächst bei einem Verfahren der eingangs genannten Art mit den kennzeichnenden Merkmalen des Anspruchs 1 gelöst.

Dadurch, dass der Funkrufempfänger ein Nahbereichskommunikationsmittel aufweist, kann dieser beim Eintreffen bei der Sammelstelle mit dieser Kontakt aufnehmen, wodurch die Sammelstelle laufend aktuelle Daten über das Eintreffen der aufgebotenen Personen erhält. Diese Daten werden an die Einsatzzentrale gemeldet, so dass diese den Erfolg der Alarmierung durch diese Rückmeldung der tatsächlich zur Verfügung stehenden Personen überwachen und allenfalls weitere Alarmierungsmassnahmen treffen kann.

Bevorzugterweise weisen der Funkrufempfänger und die Sammelstelle dabei als Kommunikationsmittel für den Nahbereich eine drahtlose Funkschnittstelle auf, insbesondere gemäss dem Bluetooth™-Standard. Auf diese Weise kann der Funkrufempfänger auf einfache Weise drahtlos in einem Nahbereich von ca. 10 m bis 50 m den Kontakt zu der Sammelstelle herstellen.

Die Aufgabe wird weiter bei einem Verfahren der eingangs genannten Art mit den kennzeichnenden Merkmalen des Anspruchs 6 gelöst.

Dadurch, dass der Funkrufempfänger mit dem Funktelefon der alarmierten Person über das Nahbereichskommunikationsmittel kommunizieren kann, wird ebenfalls eine Rückmeldung an die Einsatzzentrale ermöglicht. Dieser Aspekt der Erfindung kann für sich alleine vorhanden sein, wird aber bevorzugterweise mit demjenigen von Anspruch 1 kombiniert.

Die Aufgabe wird ferner durch ein Alarmierungssystem der eingangs genannten Art mit den kennzeichnenden Merkmalen des Anspruchs 8 gelöst.

Dadurch, dass der Funkrufempfänger das Nachbereichkommunikationsmittel aufweist und ein weiteres solches Kommunikationsmittel vorgesehen ist, das wiederum auch Mittel aufweist, um mit der Einsatzzentrale in Kontakt zu treten, wird eine Rückmeldung über den Alarmierungs- bzw. Einsatzzustand möglich.

Weiter wird die Aufgabe durch die Verwendung eines Funkrufempfängers gemäss Anspruch 12 gelöst und durch einen Funkrufempfänger gemäss Anspruch 14.

Im folgenden werden Ausführungsbeispiele der Erfindung anhand der Zeichnungen näher erläutert. Dabei zeigt
Figur 1 schematisch ein Alarmierungssystem mit Funkrufempfängern; und
Figur 2 schematisch den Aufbau eines Erfindungsgemässen Funkrufempfängers.

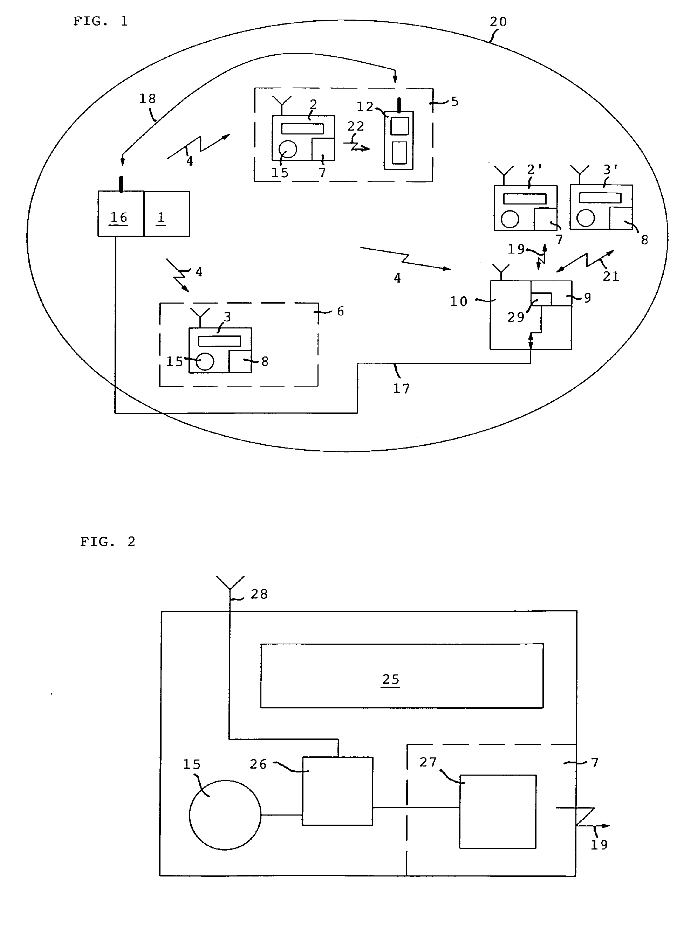

Figur 1 zeigt schematisch eine Übersicht über ein Alarmsystem 20 zur Erläuterung der vorliegenden Erfindung. Das Alarmsystem weist auf an sich bekannte Weise mindestens eine Einsatzzentrale 1 auf, von welcher aus Funkrufempfänger 2, 3 mit Mitteilungen versorgbar sind, um eine Alarmierung von Personen zu ermöglichen, welche diese Funkrufempfänger bei sich tragen. Funkrufempfänger, welche auch als Pager bezeichnet werden, sind bekannt und ebenfalls die dazugehörige Sendeinfrastruktur zur Übermittlung von Mitteilungen an solche Funkrufempfänger. Die Empfänger weisen in der Regel eine Anzeigeeinheit auf, auf welcher die Nachrichten im Klartext darstellbar sind. Das entsprechende Funkrufnetz und die Pager werden hier, da wie gesagt bekannt, nicht weiter im Detail erläutert. Die Alarmierung von Einsatzkräften mittels Pagern z.B. für Feuerwehrdienste und Rettungsdienste ist bekannt und hat sich bewährt. In der Einsatzzentrale 1 werden je nach Art des Schadenereignisses die aufzubietenden Personen, die einen Funkrufempfänger auf sich tragen, durch entsprechende Alarmmitteilungen alarmiert. Diese Personen begeben sich entsprechend zu einer ihnen vorbekannten oder mit der Alarmmitteilung mitgeteilten Sammelstelle 10, von welcher aus der Einsatz erfolgt. Solches ist bis anhin bekannt. Die Einsatzzentrale 1 hat aber bei der bekannten Alarmierung keinen genauen Überblick wann wieviele Personen bei der Einsatzstelle eintreffen und für den Einsatz zur Verfügung stehen und ob allenfalls solche alarmierten Personen verspätet oder gar nicht eintreffen, was eine zusätzliche Alarmierung weiterer Personen notwendig machen kann.

Gemäss der vorliegenden Erfindung sind nun die Pager 2, 3 jeweils mit einem Nahbereichskommunikationsmittel 7, 8 versehen. Der Pager 2 ist dabei in der Figur so dargestellt, dass er einer Person (nur als Kasten angedeutet) als Träger 5 des Pagers zugeordnet ist. Der Pager 3 ist in dem gezeigten Beispiel nicht einer Person als Träger zugeordnet, sondern einem (nur als Kasten angedeuteten) Fahrzeug 6, das mit diesem Pager 3 versehen ist. Ein reales Alarmsystem weist natürlich eine grosse Vielzahl von Trägern mit entsprechenden Pagern auf, lediglich in der Figur sind der bessern Darstellung halber nur zwei Pager bzw. Träger 5 und 6 dargestellt. Die Träger 5, 6 werden nun über ihre Pager 2, 3 durch die Einsatzzentrale 1 mittels über das Funkrufnetz auf bekannte Weise übertragenen Alarmmeldungen 4 alarmiert. Die Person 5 und das Einsatzfahrzeug 6 müssen sich entsprechend zur Sammelstelle 10 begeben, um dort mit den weiteren aufgebotenen Personen oder Fahrzeugen die Einsatzmannschaft für das Ereignis zu bilden. Bei der Sammelstelle 10, welche ein Gebäude, ein Fahrzeugpark oder eine temporär bereitgestellte Sammelstelle sein kann, ist nun ein weiteres Nahbereichskommunikationsmittel 9 vorgesehen, welches mit den Nahbereichskommunikationsmitteln 7 und 8 der Pager 2 bzw. 3 kommunizieren kann. In der Figur 1 sind die Pager 2 und 3, nachdem sie die Sammelstelle erreicht haben, als Pager 2' und 3' dargestellt. Sobald der jeweilige Pager 2' bzw. 3' die Sammelstelle erreicht hat, nimmt das Nahbereichskommunikationsmittel 7 bzw. 8 mit dem Nahbereichskommunikationsmittel 9 der Sammelstelle Kontakt auf und übermittelt diesem die Botschaft, dass der Pager im entsprechenden Nahbereich der Sammelstelle eingetroffen ist. Damit erhält die Sammelstelle 10 die Information, dass der Träger des jeweiligen Pagers die Sammelstelle erreicht hat. Diese Information wird von der Sammelstelle 10 an die Einsatzzentrale als Rückmeldung weitergeleitet. Die Sammelstelle 10 bzw. deren Nahbereichskommunikationsmittel ist dazu mit der Einsatzzentrale 1 über ein beliebiges Fernbereichkommunikationsmittel verbunden. In Figur 1 ist dies so dargestellt, dass die Sammelstelle 10 über eine spezielle oder öffentliche Telefonleitung 17 mit dem normalen Telefonnetz 16 verbunden ist, welches in der Figur lediglich als Block dargestellt ist. Die Einsatzzentrale 1 ist natürlich ebenfalls an das Telefonnetz 16 angeschlossen und empfängt somit die Rückmeldung von der Sammelstelle 10 über das Telefonfestnetz. Natürlich kann die Sammelstelle 10 die Rückmeldung an die Einsatzzentrale auch über andere Mittel vornehmen, so z.B. über das Mobiltelefonnetz oder über eine spezielle Kommunikationseinrichtung des Alarmsystems 20. Die Rückmeldung, dass ein Pager bzw. der zugehörige Träger bei der Sammelstelle 10 angekommen ist, kann bei der jeweiligen Ankunft erfolgen, so dass die Einsatzzentrale fortlaufend über das Eintreffen der Träger bei der Sammelstelle informiert ist oder kann zu gewissen Zeitpunkten oder nach Erreichen einer vorbestimmten Mannschaftsstärke durch eine oder mehrere Sammelmeldungen erfolgen. Die einzelnen Träger 5, 6 erreichen die Sammelstelle je nach Weg, den sie dahin zurückzulegen haben, zu verschiedenen Zeiten oder erreichen die Sammelstelle gar nicht innerhalb eines von der Einsatzzentrale festgelegten Zeitraumes. Durch die Rückmeldung ist die Einsatzzentrale über den aktuellen Mannschaftsbestand an der Sammelstelle 10 informiert und kann, allenfalls durch weitere Alarmmeldungen, weitere Personen oder Fahrzeuge aufbieten.

Bei einer bevorzugten Ausführungsform ist die Sammelstelle 10 ebenfalls mit einem Funkrufempfänger versehen, so dass sie die Alarmmeldung 4 ebenfalls empfangen kann. Die Sammelstelle kann damit einerseits das korrekte Aussenden der Alarmmeldung 4 der Einsatzzentrale bestätigen, was wiederum über den Telefonrückmeldekanal 16, 17 erfolgen kann, und andererseits kann die Sammelstelle 10 ab dem Zeitpunkt des Alarmempfangs ihre Nahbereichskommunikationsschnittstelle 9 aktivieren, welche damit bereit ist mit den entsprechenden Nahbereichskommunikationssschnittstellen 7, 8 der Funkrufempfänger in Kontakt zu treten.

Die Nahbereichskommunikationsmittel bzw. diese Schnittstellen können auf verschiedene Art und Weise ausgestaltet sein. In einer einfachsten Version können die Pager 2, 3 bzw. die Schnittstelle 9 lediglich Kontaktmittel aufweisen, durch welche z.B. durch ein mechanisches Einschieben des jeweiligen Pagers in eine Einschubschnittstelle 9 das Vorhandensein des Pagers detektiert wird. In diesem Fall muss der jeweilige Träger 5 sich in der Sammelstelle 10 an den entsprechenden Ort begeben, und dort seinen Pager in das Nahbereichskommunikationsmittel 9 einschieben, welches dadurch das Eintreffen des Pagers bzw. des Trägers desselben detektiert und an die Einsatzzentrale 1 rückmelden kann. Ein solches Vorgehen ist allerdings nicht bevorzugt, da es in der Hektik eines Einsatzes unzuverlässig ist und von den Trägern der Funkrufempfänger eine zusätzliche Manipulation erfordert. Eine Ausführungsvariante dieses Vorgehens wäre das Vorsehen einer optischen Schnittstelle bzw. optischer Kommunikationsmittel für den Nahbereich, mit denen es genügen würde, wenn der jeweilige Pager in Sichtverbindung mit dem Kommunikationsmittel 9 der Sammelstelle 10 gelangt, so dass zum Beispiel eine Infrarotübertragung möglich ist, um den Pager bei der Sammelstelle zu erkennen. Auch dies erfordert indes eine entsprechende Handlung durch den Träger. Besonders bevorzugt ist es daher, wenn die Nahbereichskommunikationsmittel 7, 8, 9 als Funkkommunikationsmittel ausgestaltet sind, die eine Funkverbindung in einem Nahbereich um die Sammelstelle 10 zwischen den Kommunikationsmitteln 7, 8 und 9 aufbauen können. In diesem Falle genügt es, wenn der Träger 5, 6 des Pagers in den Nahbereich der Sammelstelle 10 gelangt, wobei unter Nahbereich z.B. eine Distanz von 0-50 m zwischen den Kommunikationsmitteln 7, 8 einerseits und 9 andererseits verstanden werden kann. Gelangt der Träger des Pagers also mit seinem Pager in die entsprechende Distanz zum Nahbereichskommunikationsmittel 9, so nimmt der Pager über Funk mit der Sammelstelle 10 Kontakt auf und meldet sich dort als anwesend an. Ein besonders bevorzugtes entsprechendes Kommunikationsmittel ist als sogenannte Bluetooth™-Funkverbindung bekannt. Diese ist standardisiert und dem Fachmann bekannt. Die Bluetooth-Kernspezifikationen Version 1.1 können z.B. auf dem Internet unter der Adresse www.bluetooth.org/specifications.htm eingesehen werden. Die Bluetooth™-Technik ist eine handelsübliche bekannte Technik und muss hier nicht im Detail erläutert werden. Wesentlich ist, dass sich entsprechende Geräte erkennen können und im Nahbereich der Bluetooth™-Funkverbindung Signale miteinander entsprechend dem Bluetooth™-Protokoll austauschen können. Vorzugsweise sind also die Nahbereichskommunikationsmittel 7, 8 der Funkrufempfänger solche Bluetooth™-Module und ebenfalls das Nahbereichskommunikationsmittel 9, das in der Sammelstelle 10 bereitgestellt wird. Jeder Pager nimmt dabei über sein Bluetooth™-Modul 7, 8 Kontakt mit dem Modul 9 auf, sobald der Pager in die entsprechende Funkreichweite gelangt, was durch die Pfeile 19 und 21 dargestellt ist. Der Pager übermittelt dann als Teil des Datenaustausches die Information, dass er bei der Sammelstelle 10 eingetroffen ist, welche durch das Kommunikationsmittel 9 ausgewertet und wie erläutert an die Einsatzzentrale zurückgemeldet wird.

Ein weiterer Aspekt der Erfindung kann anhand des Funkrufempfängers 2 und des Trägers 5 erläutert werden. In diesem Fall wird ebenfalls der Funkrufempfänger 2 durch das Alarmsignal 4 alarmiert und er weist die entsprechende Nahbereichskommunikationsschnittstelle auf, welche bevorzugterweise wiederum ein Bluetooth™-Modul umfasst, das in dem Pager aktivierbar ist. In diesem Falle trägt der Träger 5 weiter ein Mobiltelefon 12 bei sich, welches ein mit den bekannten Mobiltelefonnetzen funktionierendes tragbares Telefon ist. Es ist bekannt, dass solche Telefone eine Bluetooth™-Schnittstelle aufweisen können. In diesem Falle nimmt der Funkrufempfänger über seine Nahbereichskommunikationsschnittstelle 7 mit dem Telefon 12 des Trägers Kontakt auf (Pfeil 22) und dieses meldet über das Mobiltelefonnetz, welches in der Figur als Signalpfad 18 und ebenfalls den Block 16 dargestellt ist, an die Einsatzzentrale 1 zurück, dass der Pager 2 des Trägers 5 das Alarmierungssignal 4 erhalten hat. Mit dieser Rückmeldung weiss die Einsatzzentrale, dass der Träger 5 den Alarm erhalten hat und kann davon ausgehen, dass er sich auf dem schnellsten Wege zur Sammelstelle 10 begibt. Diese Rückmeldung gibt wenigstens darüber Aufschluss, wieviele Träger eines Pagers durch das Alarmierungssignal erreicht worden sind. Wird die Rückmeldung durch das Mobiltelefon 12 um die automatisch generierte Anzeige ergänzt, in welcher Funkzelle des Mobiltelefonnetzes sich das Funktelefon 12 befindet, so kann die Einsatzzentrale 1 über die Auswertung dieser Daten immerhin auch feststellen wo sich der Träger 5 befindet und daraus Rückschlüsse über die Zeit ziehen, welche der Träger bis zum Erreichen der Sammelstelle 10 benötigen wird. Der Aspekt der Rückmeldung über das Mobiltelefon 12 kann daher bereits für sich alleine für eine bessere Alarmierung über Funkrufempfänger verwendet werden. Bevorzugt ist indes die Kombination mit dem vorhergehend erläuterten Aspekt, bei welchem beim Eintreffen an der Sammelstelle eine Rückmeldung an die Einsatzzentrale erfolgt. Dies gibt der Einsatzzentrale den genauen und aktuellen Überblick über den Mannschaft- und allenfalls Fahrzeugbestand.

Die Aktivierung der jeweiligen Nahbereichskommunikationsschnittstelle 7, 8 kann im Funkrufempfänger automatisch erfolgen, wenn dieser das Alarmierungssignal 4 erhalten hat. Der Träger des Pagers muss in diesem Fall nichts weiter unternehmen und sein Eintreffen bei der Sammelstelle 10 wird erkannt; allenfalls erfolgt auch vorher automatisch die Rückmeldung über das Mobiltelefon 12. Der Funkrufempfänger 2, 3 kann indes auch so ausgestaltet werden, dass ein Betätigungsmittel 15 bedient werden muss, um einerseits den Empfang der Alarmierungsmitteilung beim Pager zu quittieren und andererseits dadurch die Nahbereichskommunikationsschnittstelle 7, 8 zu aktivieren. Die Betätigung des Elementes 15 heisst dann für den Träger die Bestätigung: "Ich komme" und diese erfolgt als Rückmeldung an die Einsatzzentrale automatisch, sobald er sich bei der Sammelstelle 10 befindet oder allenfalls wenn er über ein entsprechendes Mobiltelefon 12 verfügt. Im Falle des Aspektes mit dem Mobiltelefon 12 sind bei automatischer Aktivierung der Bluetooth™-Schnittstelle auch stille Probealarme möglich, welche vom alarmierten Träger nicht bemerkt werden und lediglich via Pager 2 und Mobiltelefon zu einer Rückmeldung an die Zentrale führen, ohne dass der Träger 5 effektiv alarmiert wird oder allenfalls nur indem er über den Probealarm informiert wird.

Die Kontaktaufnahme des Pagers mit der Sammelstelle kann auch bei der Rückkehr von einem Einsatz erneut erfolgen. Die Einsatzzentrale bekommt dann die Rückmeldung, dass der Träger vom Einsatz wieder zur Sammelstelle zurückgekehrt ist. Dies kann vorteilhaft sein, um die Einsatzdauer automatisch erfassen zu können, was allenfalls für die Abrechnung der Kosten eines Einsatzes vorteilhaft sein kann. Entsprechend kann auch die Einsatzdauer von Fahrzeugen erfasst werden, welche mit einem entsprechenden Pager versehen sind. Die Einsatzzentrale kann auf diese Weise auch Statistiken erstellen und feststellen, ab wann welcher Mannschaftsbestand anwesend gewesen ist und wer wie lange im Einsatz gewesen ist. Die Verwaltung der Meldungen der Pager und die Rückmeldung an die Einsatzzentrale 1 erfolgt über eine entsprechende Steueranordnung 29 des Nahbereichskommunikationsmittels 9.

Figur 2 zeigt schematisch einen Funkrufempfänger mit der Antenne 28 zum Empfang eines Funkrufes und der an sich bekannten Empfangs- und Auswerteinrichtung 26, welche auch das Display 25 des Funkrufempfängers 2 ansteuert. Diese Auswerteinrichtung 26 ist nun mit einem grundsätzlich handelsüblichen Bluetooth™-Modul 27 verbunden, welches das entsprechende Nahbereichsfunksignal 19 abgeben kann. Das Bluetooth™-Modul wird durch die Auswerteinrichtung 26 aktiviert und deaktiviert, entsprechend dem empfangenen Alarmierungssignal. Wie erwähnt kann dazu ein Betätigungselement 15 vorgesehen sein, welches die Aktivierung des Bluetooth™-Moduls steuert, welche aber auch automatisch durch die Auswerteinrichtung erfolgen kann. Auf dem Display 25 kann die Aktivierung des Bluetooth™-Moduls 27 der Nahbereichskommunikationsschnittstelle 7 angezeigt werden. Die entsprechende Ausgestaltung des Funkrufempfängers 2 mit einem an sich bekannten Bluetooth™-Modul liegt dabei im Bereich des normalen Könnens eines Fachmannes. Entsprechend wird auch bei der Sammelstelle 10 bei deren Nahbereichskommunikationsmittel ein Bluetooth™-Modul oder mehrere solche Module eingesetzt und das Nahbereichskommunikationsmittel 9 ist weiter mit der genannten Einrichtung 29 der Sammelstelle verbunden, welche den entsprechenden Kontakt mit der Einsatzzentrale 1 aufnimmt, wie erläutert z.B. über das Telefonnetz 16, 17.

## Patentansprüche

1. Verfahren zur Alarmierung, bei welchem von mindestens einer Einsatzzentrale (1) an mindestens einen Funkrufempfänger (2, 3) ein Alarmierungssignal (4) abgegeben wird, welches den Träger (5, 6) des Funkrufempfängers veranlasst, sich bei einer Sammelstelle (10) einzufinden, **dadurch gekennzeichnet, dass** der Funkrufempfänger mit einem Nahbereichkommunikationsmittel (7, 8) versehen ist und die Sammelstelle ein dazu kompatibles Nahbereichskommunikationsmittel (9) bereitstellt, dass beim Eintreffen des Trägers (5, 6) die Kommunikationsmittel (7, 8, 9) miteinander kommunizieren, so dass die Sammelstelle das Eintreffen des Funkrufempfängers bei der Sammelstelle detektiert, und dass die Sammelstelle eine Verbindung mit mindestens einer Einsatzzentrale aufnimmt, um dieser das Eintreffen des Funkrufempfängers bzw. dessen Trägers bei der Sammelstelle zu melden.

2. Verfahren nach Anspruch 1, **dadurch gekennzeichnet, dass** die Kommunikationsmittel drahtlose oder kontaktgebundene Kommunikationsmittel sind.

3. Verfahren nach Anspruch 2, **dadurch gekennzeichnet, dass** die drahtlosen Kommunikationsmittel funktechnische oder optische Kommunikationsmittel sind.

4. Verfahren nach einem der Ansprüche 1 bis 3, **dadurch gekennzeichnet, dass** die Kommunikationsmittel Funkmittel gemäss dem Bluetooth-Standard sind.

5. Verfahren nach Anspruch 1, **dadurch gekennzeichnet, dass** die Sammelstelle (10) zum Empfang des Alarmierungssignals (4) ausgestaltet ist und dessen Empfang, insbesondere via Telefonverbindung, an die Einsatzzentrale bestätigt.

6. Verfahren zur Alarmierung bei welchem von mindestens einer Einsatzzentrale (1) an mindestens einen Funkrufempfänger (2, 3) ein Alarmierungssignal (4) abgegeben wird, welches den Träger (5, 6) des Funkrufempfängers veranlasst, sich bei einer Sammelstelle (10) einzufinden, insbesondere nach Anspruch 1, **dadurch gekennzeichnet, dass** der Funkrufempfänger (2) mit einem Nahbereichskommunikationsmittel (7) versehen ist, und dass der Träger des Funkrufempfängers ein Funktelefon (12) mit einem kompatiblen Nahbereichskommunikationsmittel bei sich trägt, dass die Kommunikationsmittel miteinander kommunizieren, und dass über das Funktelefon (12) der Empfang des Alarmsignals (4) an die Einsatzzentrale bestätigt wird.

7. Verfahren nach einem der Ansprüche 1 bis 6, **dadurch gekennzeichnet, dass** das Kommunikationsmittel des Funkrufempfängers nach Empfang des Alarmsignals automatisch aktiv wird, oder dass das Kommunikationsmittel des Funkrufempfängers erst nach Betätigung eines Bedienungselementes (15) am Funkrufempfänger aktiv wird.

8. Alarmierungssystem (20) mit mindestens einer Einsatzzentrale (1) und mindestens einem Funkrufempfänger (2, 3), **dadurch gekennzeichnet, dass** der Funkrufempfänger mit einem Nahbereichskommunikationsmittel (7, 8) ausgestattet ist, und dass das Alarmsystem (20) mit mindestens einem weiteren Nahbereichskommunikationsmittel versehen ist, das mit dem Kommunikationsmittel des Funkrufempfängers kompatibel ist und welches Mittel aufweist, um mit der Einsatzzentrale in Kontakt zu treten.

9. Alarmierungssystem nach Anspruch 8, **dadurch gekennzeichnet, dass** das weitere Nahbereichskommunikationsmittel an einer Sammelstelle positioniert ist und/oder in einem Funktelefon angeordnet ist.

10. Alarmierungssystem nach Anspruch 8 oder 9, **dadurch gekennzeichnet, dass** das Nahbereichskommunikationsmittel eine Funkschnittstelle ist, insbesondere nach dem Bluetooth-Standard.

11. Alarmierungssystem nach einem der Ansprüche 8 bis 10, **dadurch gekennzeichnet, dass** das Nahbereichskommunikationsmittel des Funkrufempfängers automatisch durch eine vorbestimmte Funkrufmeldung aktivierbar ist und/oder durch ein Betätigungsmittel am Funkrufempfänger.

12. Verwendung eines Funkrufempfängers (2, 3) in einem Alarmierungssystem (20), **dadurch gekennzeichnet, dass** der Funkrufempfänger mit einem Nahbereichskommunikationsmittel (7, 8) versehen ist, welches zur Kontaktaufnahme mit einem weiteren Element (9, 10; 12) des Alarmierungssystems ausgestaltet ist.

13. Verwendung nach Anspruch 12, **dadurch gekennzeichnet, dass** das weitere Element eine Sammelstelle (9, 10) und/oder ein Funktelefon ist.

14. Funkrufempfänger (2, 3) mit einem Nahbereichskommunikationsmittel (7, 8).

15. Funkrufempfänger nach Anspruch 14, **dadurch gekennzeichnet, dass** das Nahbereichkommunikationsmittel automatisch durch den Empfang eines vorbestimmten Funkrufes aktivierbar ist und/oder durch ein am Funkrufempfänger vorgesehenes Betätigungsmittel (15) aktivierbar ist.

16. Funkrufempfänger nach Anspruch 14 oder 15, **dadurch gekennzeichnet, dass** das Nahbereichkomunikationsmittel eine Funkschnittstelle aufweist, insbesondere nach dem Bluetooth-Standard.
